# EUROPÄISCHE PATENTANMELDUNG

(11) **EP 1 515 077 A1**
(43) Veröffentlichungstag der Anmeldung: **16.03.2005**
(21) Anmeldenummer: 03405667.1
(22) Anmeldetag: 11.09.2003
(51) Int. Cl.: F16L 55/164

(54) **Verfahren zum Abdichten von Gasleitungen**

(71) Anmelder: Suter, Michael, 6340 Baar (CH)
(72) Erfinder: Suter, Michael, 8038 Zürich (CH)
(74) Vertreter: Volpert, Marcus

(57) **Zusammenfassung**

Das Verfahren dient dem Abdichten von einem Leitungssystem für Gas, insbesondere Erdgas, das aus zusammengefügten Leitungsabschnitten besteht. Das Gasleitungssystem ist ein bestehendes sanierungsbedürftiges System in einem Gebäude. Vor dem Abdichtungsverfahren werden die Gasgeräte und die Zähler zum Abdichten abmontiert. Anstelle der Gasgeräte und des Zählers werden Ventile montiert. Das Verfahren umfasst das Füllen des Leitungssystems mit einer abdichtenden Polymersuspension. Zur Abdichtung von möglichen Leckstellen bei Rohrverbindungen wird die abdichtende Polymersuspension im System stehen gelassen und nach einer vorbestimmten Verweilzeit wiederum abgelassen. Das Leitungssystem wird nach dem Ablassen der Polymersuspension mit getrockneter Druckluft mit einer Temperatur von 5°C bis 70°C ausgeblasen, um das Leitungssystem zu trocknen. Die relative Luftfeuchtigkeit der eingeleiteten Luft beträgt weniger als 99%.

## Beschreibung

Die vorliegende Erfindung betrifft ein Verfahren zum Abdichten von Gasleitungen, insbesondere von bestehenden Gasleitungen in Gebäuben.

Gasleitungen in Gebäuden, die Schraub- oder Gewindeverbindungen enthalten, müssen gasdicht abgedichtet werden. Derartige Abdichtungen werden seit Jahrzehnten mittels Hanffasern durchgeführt. Aus Hanfmaterial bestehende Abdichtungen besitzen während Jahren eine gute Abdichtwirkung. Im Laufe der Zeit trocknen sie jedoch durch das durchströmende Gas aus, was ein Schrumpfen des pflanzlichen Materials verursacht und zu Undichtigkeiten führt, besonders wenn während der Lebensdauer der Gasleitung von Stadtgas auf Erdgas umgestellt wurde. Die Undichtigkeiten führen nicht nur zu Gasverlusten, sondern können auch mit erheblichen Sicherheitsproblemen verbunden sein.

Um derartige Undichtigkeiten möglichst kostengünstig und ohne Freilegung der Leitung zu beheben, sind gemäss dem Stand der Technik Abdichtungsverfahren und entsprechende Dichtungsmittel vorgeschlagen worden.

CH-63698 beschreibt ein Verfahren zum Abdichten von Gasleitungen, in dem das Rohrsystem mit einer Flüssigkeit angefüllt wird, die aus einer Lösung eines Harzstoffes in einer leicht verdunstbaren Flüssigkeit besteht. Nach einer Zeit wird die Flüssigkeit an tiefster Stelle der Leitung wieder abgelassen. Eine typische Lösung ist Schellack in Spiritus.

DE-A-1 00 44 550 und 196 42 077 beschreiben moderne Abdichtmittel für den eingangs genannten Zweck. Die Abdichtmittel enthalten ein viskosflüssiges Kunststoff/Lösungsmittel-Gemisch aus Polyvinylalkohol, Wasser und mehrwertigem Alkohol, wobei gemäss dem erstgenannten Patentdokument auch NaCl enthalten sein kann. Die Dichtmittel sind dazu bestimmt, aus einem Druckbehälter oder anders in die Leitung eingefüllt und während einer bestimmten Verweilzeit unter Druck gehalten zu werden. Nach dem Ablassen wird die Leitung durch Stickstoff oder Druckluft ausgeblasen und das restliche Mittel gegebenenfalls durch Molchen mit Schaumstoffpfropfen bzw. Schaumgummikugeln entfernt. Durch diese Behandlung dringt das Dichtungsmittel in die Gewindeverbindungen ein und eine Dichtungsprüfung bestätigt, dass die Leitung wiederum abgedichtet ist.

Ein heute gängiges Produkt für die Abdichtung vom Gasleitungen wird unter dem Markennamen "Prodoral R6-1 ®"-Dispersion vermarktet. Sanierungen von Gasleitungen in bestehenden und bewohnten Gebäuden müssen möglichst schnell durchgeführt werden. Es ist deshalb Aufgabe der vorliegenden Erfindung, ein verbessertes Verfahren vorzuschlagen, das gegenüber den bisher angewandten Verfahren schneller durchgeführt werden kann und damit kostengünstiger zu stehen kommt.

Es wurde gefunden, dass dies ohne aufwändige Elektrotrocknung möglich ist, wenn nach der Behandlung das Röhrsystem durch getrocknete Druckluft bei maximal 70°C, normalerweise bei 20 - 25°C und bevorzugt bei 21 °C, ausgeblasen wird. Gegenstand der vorliegenden Erfindung ist demzufolge das im Patentanspruch 1 definierte Verfahren. Bei den erfindungsgemäss zu sanierenden Leitungen handelt es sich um Leitungen für Brenngase, insbesondere Erdgas.

Für eine Abdichtung einer bestehenden Gasleitung wird erfindungsgemäss eine wässrige Kunststoffdispersion verwendet, welche die undichten Gewindedichtungen abdichtet. Typische Dispersionen sind solche auf Basis von teilweise hydrolysiertem Polyvinylalkohol, Copolymeren aus Vinylacetat und Acrylsäureester oder Copolymeren aus Vinylacetat Acrylsäureester und Ethylen. Als Handelsprodukt hat sich, wie oben erwähnt, gegenwärtig Prodoral R6-1 ® durchgesetzt. Das Produkt ist erhältlich bei der Firma Goldschmidt TIB, Mülheimer Str. 16-22, D-68219 Mannheim (Deutschland). Bei der abzudichtenden Gasleitung werden die Gasgeräte demontiert und für die Geräteabstellhahnen Belüftungshahnen eingesetzt. Unter Gasgeräten gemäss der vorliegenden Beschreibung sollen Gas verbrauchende Geräte aller Art und auch Gasmessgeräte, wie Gaszähler, verstanden werden. An der tiefsten Stelle der Hauptleitung wird ein Abschlusshahn eingebaut. Wo erforderlich, beispielsweise bei Überbrückungen bei Gaszählern, werden mit Normkupplungen versehene Schläuche verwendet. Ebenfalls durch Normanschlüsse können Hilfsgeräte, wie Expansionsgefässe, Überdruckventile, Messgeräte und dergleichen, angeschlossen werden. Zur Prüfung der Dichtigkeit des Netzes wird dieses unter Druck gesetzt. Staub- und Rostpartikel werden durch Druckluft so weit wie möglich aus dem System entfernt. Die Dichtungssuspension wird anschliessend im Leitungssystem aufgefüllt, wobei die Leitung durch die Entlüftungshahnen entlüftet wird. Das Dichtungsmittel wird mit einem Überdruck von mindestens 3 bar in die Leitungen gedrückt, damit es in die undichten Gewindeverbindungen gepresst wird. Vorzugsweise beträgt der Überdruck 6 bar. Anschliessend wird das Dichtungsmittel während mindestens 1/2 Std. unter Druck in der Leitung verweilen gelassen, bevor es durch den an der tiefsten Stelle des Netzes eingebauten Abschlusshahn abgelassen wird.

Um das überschüssige Dichtungsmittel aus dem Leitungssystem zu treiben, wird das System zunächst von oben nach unten belüftet und dann mit trockener Druckluft ausgeblasen. Das überschüssige Dichtungsmittel gelangt dann in einen Auffangbehälter. Um das Dichtungsmittel vollständig aus dem Leitungssystem zu entfernen, werden erforderlichenfalls Schaumstoffkörper (Molche) in das Leitungssystem eingeführt und unter Druck durch das Rohr gedrückt, damit die Rohrwand sauber abgestreift wird. Vor dem Auffangbehälter für des Dichtungsmittel werden die Molchen in einer speziellen Auffangvorrichtung gesammelt. Eine solche Auffangvorrichtung ist vorzugsweise derart ausgestaltet, dass eine Mehrzahl von Molchen darin Platz findet, so dass der Entleerungs- und Reinigungsvorgang ununterbrochen durchgeführt werden kann. Eine solche Auffangvorrichtung ist beispielsweise ein Behälter mit einem Deckel, einem Zufuhranschluss und einem Ableitungsanschluss, wobei der Behälter durch eine Sieb- oder Gitterwand, die bevorzugt horizontal angeordnet ist, in ein erstes und ein zweites Abteil aufgeteilt wird. Der Zufuhranschluss führt in das erste Abteil und der Ableitungsanschluss führt vom zweiten Abteil weg. Beim Reinigungsverfahren werden die durch Druck durch das System gedrückten Molche durch die Sieb- oder Gitterwand aufgehalten, während gegebenenfalls noch vorhandene Flüssigkeit in das zweite Abteil und über den Ableitungsanschluss in die Auffangbehälter für Flüssigkeit geleitet wird.

Es können hierzu eine Mehrzahl von Auffangbehältern für das Dichtungsmittel angewandt werden, damit auch hier kein Hindernis für die Entleerung in einem Zug besteht.

In einer Ausführungsform wird vor dem Ablassen der Polymersuspension an der tiefsten Stelle des Leitungssystems ein Konglomerat von Behältern angeschlossen, die der Aufnahme der abgelassenen Polymersuspension dienen. Es handelt sich um die gleichen Behälter, mit welchen das Dichtungsmaterial angeliefert wird, und die nach dem Gebrauch, wiederum aufgefüllt, für einen neuen Einsatz bereit stehen. Das genannte Konglomerat von Behältern besteht aus einer Mehrzahl von Behältern mit speziellen Deckeln, bei welchen jeweils am Deckel ein Leitungsanschluss vorhanden ist und an der Innenseite ein Schwimmer angebracht ist. Die Zufuhr von weiterer Flüssigkeit wird unterbunden, wenn der jeweilige Behälter gefüllt ist, da der Schwimmer ein Ventil betätigt, das eine weitere Zufuhr unterbindet. Die weitere Menge von abgelassener Flüssigkeit wird dann einem andern vorhandenen leeren Behälter zugeführt. Jeder Behälter weist einen Leitungsanschluss zum Ablasshahn auf. Dabei wird eine baumartig verzweigte Leitung gebildet, wobei der Stamm mit dem Gasleitungssystem verbunden ist und die verschiedenen Äste mit den genannten Behältern.

Im Zusammenhang mit dem vorliegenden Verfahren werden Schnellanschlüsse mit Spannzangen für Innen- und Aussengewinde verwendet. Typische derartige Anschlüsse werden von der Firma Weh GmbH, Siemensstrasse 5 D-89257 Illertissen angeboten. Erwähnt sind die Anschlüsse vom Typ TW 17 und TW 18. Derartige Anschlüsse (bis 3") mit einer hohen Zuverlässigkeit und Sicherheit sind einer schnellen Arbeitsweise ebenfalls förderlich.

Erfindungsgemäss ist es bei Leitungssystemen möglich, deren Durchmesser nicht über einem bestimmten Wert (3"), wie er normalerweise in Gebäudegasleitungen eingesetzt wird, liegt, die vollständige Entfernung des Dichtungsmittels ohne Molche durchzuführen. Dies ist eine wesentliche Vereinfachung des Verfahrens und kann zu einer beträchtlichen Zeitersparnis führen. Eine aufwändige Elektrotrocknung ist ebenfalls überflüssig, wenn erfindungsgemäss gekühlte und getrocknete Druckluft in das System eingeblasen wird. Das in den Fugen bzw. undichten Stellen des Systems eingedrungene Dichtungsmittel (Prodoral-R6-1) sollte nicht mit Wasser behandelt werden, damit es seine vollständige Dichtungswirkung entwickeln und beibehalten kann.

Es wurde gefunden, dass, wenn die Luft auf ca. 13°C (ca. Temperatur von Leitungswasser) abgekühlt wird, überschüssiges Wasser aus der Druckluft ausgeschieden wird und dieses abgelassen werden kann. Wenn die Luft schliesslich wieder auf 22°C gebracht wird, kann eine Reduktion der relativen Luftfeuchtigkeit (> 99%) erzielt werden, wobei sie ausreichend tief sein muss, um eine Kondensatbildung zu vermeiden. Mit einer weiteren bescheidenen Erhöhung der Temperatur lässt sich die relative Luftfeuchtigkeit weiter senken. Die Kühlung lässt sich durch eine einfache Leitungswasserkühlung oder Frischwasserkühlung erreichen. In der Praxis wird die Druckluft durch einen handelsüblichen Kompressor erzeugt. Derartige Kompressoren kühlen die Luft im besten Fall nicht unter eine Temperatur ab, die 7°C über der Umgebungstemperatur liegt. Im Sommer kann dies ohne Weiteres ca. 42°C mit 100% relativer Feuchtigkeit sein.

Es wird mit einem Ruhedruck von ca. 6 bar gearbeitet, wobei beim Ausblasen ein Druck von bis zu 0.3 bar Fliessdruck verwendet wird. Die Strömungsgeschwindigkeit zur pneumatischen Förderung beträgt mindestens 40 m/s.

Durch eine Druckprüfung nach der Behandlung wird belegt, dass das behandelte Gasleitungssystem wiederum dicht ist und den Anforderungen betreffend Sicherheit und Gasverlust entspricht.

## Patentansprüche

1. Verfahren zum Abdichten von einem Gas-Leitungssystem, insbesondere einem Erdgas-Leitungssystem, das aus zusammengefügten Leitungsabschnitten besteht, wobei zuerst das Gas aus dem Leitungssystem entfernt wird, dann die Gasgeräte abmontiert werden, anstelle der Gasgeräte Ventile montiert werden, das so vorbereitete Leitungssystem mit einer abdichtenden Polymersuspension gefüllt wird, damit diese zur Abdichtung von möglichen Leckstellen bei Rohrverbindungen in diese Leckstellen eindringen kann, und die abdichtende Polymersuspension nach einer Verweilzeit wiederum abgelassen wird, **dadurch gekennzeichnet, dass** das Leitungssystem nach dem Ablassen der Polymersuspension mit getrockneter Druckluft mit einer Temperatur von 5°C bis 70°C ausgeblasen wird um das Leitungssystem zu trocknen, wobei die relative Luftfeuchtigkeit der eingeleiteten Luft > 99% beträgt.

2. Verfahren nach Anspruch 1 **dadurch gekennzeichnet, dass** die getrocknete Druckluft eine Temperatur im Bereich von 20 - 25°C und bevorzugt bei 21 °C aufweist.

3. Verfahren nach Anspruch 1 oder 2, **dadurch gekennzeichnet, dass** die Ventile an den Rohrenden, wo die abmontierten Gasgeräte einschliesslich der Zähler befestigt waren, temporär über Präzisions-Schnellanschlüsse angeschlossen sind.

4. Verfahren nach einem der Ansprüche 1 bis 3 **dadurch gekennzeichnet, dass** als Ventile Belüftungshahnen und an der tiefsten Stelle des Rohrsystems ein Abschlusshahn vorgesehen sind, wobei der Abschlusshahn für das Zuführen und Ablassen der abdichtenden Polymersuspension dient.

5. Verfahren nach einem der Ansprüche 1 bis 4, **dadurch gekennzeichnet, dass** die Druckluft durch einen Kompressor erzeugt wird und anschliessend durch einen Kühler mit einem durch Leitungswasser gekühlten Kühlmantel abgekühlt wird, derart, dass die komprimierte Luft nach dem Durchtritt eine Temperatur aufweist, die zwischen derjenigen des Kühlwassers und derjenigen der Umgebung liegt und beim Erreichen des Taupunktes aus der abgekühlten Luft Wasser ausgeschieden wird und schliesslich die Temperatur wieder um 1 bis 70°C, beispielsweise um 6 bis 10°C, angehoben wird, so dass die relative Feuchtigkeit einen Wert von < 99% annimmt.

6. Verfahren nach einem der Ansprüche 1 bis 5, **dadurch gekennzeichnet, dass** vor dem Ablassen der Polymersuspension an der tiefsten Stelle des Leitungssystems ein Konglomerat von Behältern angeschlossen wird, die der Aufnahme der abgelassenen Polymersuspension dienen.

7. Verfahren nach Anspruch 6, **dadurch gekennzeichnet, dass** das Konglomerat von Behältern aus einer Mehrzahl von Behältern mit Deckel besteht, bei welchen jeweils am Deckel ein Schwimmer angebracht ist, derart, dass die Zufuhr von weiterer Flüssigkeit unterbunden wird, wenn der jeweilige Behälter gefüllt ist, und die Flüssigkeit einem andern vorhandenen leeren Behälter zugeführt wird, wobei jeder Behälter einen Leitungsanschluss zum Ablasshahn aufweist, unter Bildung einer verzweigten Leitung.

8. Verfahren nach einem der Ansprüche 1 bis 7, **dadurch gekennzeichnet, dass** das Rohrsystem vor der Trocknung durch Pressluft mit Molchen gereinigt wird.

9. Verfahren nach Anspruch 8, **dadurch gekennzeichnet, dass** dem Leitungssystem nach dem Ablassen der Polymersuspension ein Molchenauffanggerät angeschlossen wird, das mehrere Molche aufnehmen kann, ohne dass das Reinigungsverfahren unterbrochen werden muss.

10. Verfahren nach Anspruch 6 und 8, **dadurch gekennzeichnet, dass** dem Leitungssystem vor dem Ablassen der Polymersuspension zwischen dem Ablassventil und dem Konglomerat von Behältern ein Molchenauffanggerät angeschlossen wird, das mehrere Molche aufnehmen kann, damit das Ablassen der Suspension und das Reinigen des Systems durch Molchen nacheinander und ohne Unterbruch durchgeführt werden können.

11. Verfahren nach einem der Ansprüche 1 bis 5, **dadurch gekennzeichnet, dass** der Druckluft über ein Druckhalteventil ein Druck von 4 bar verliehen wird.

12. Verfahren nach einem der Ansprüche 1 bis 11, **dadurch gekennzeichnet, dass** das Leitungssystem während einer Verweilzeit von mindestens 30 Min. unter Druck mit der abdichtenden Polymersuspension behandelt wird und der Trocknungsvorgang mindestens 3 Min. dauert.
